# EUROPÄISCHE PATENTSCHRIFT

(11) **EP 0 672 452 B1**
(45) Veröffentlichungstag und Bekanntmachung des Hinweises auf die Patenterteilung: **14.05.1997**
(21) Anmeldenummer: 94103955.4
(22) Anmeldetag: 15.03.1994
(51) Int. Cl.: B01J 23/755, C10G 45/48

(54) **Nickelhaltige Hydrierkatalysatoren**
Nickel containing hydrogenation catalyst
Catalyseur d'hydrogénation à base de nickel

(43) Veröffentlichungstag der Anmeldung: 20.09.1995
(73) Patentinhaber: BASF Aktiengesellschaft, 67063 Ludwigshafen (DE)
(72) Erfinder: Polanek, Peter, Dr., D-69469 Weinheim (DE); Schwahn, Harald, Dr., D-69168 Wiesloch (DE); Irgang, Matthias, Dr., D-69121 Heidelberg (DE); Freire-Erdbrügger, Christina, Dr., D-67240 Bobenheim-Roxheim (DE)

(56) Entgegenhaltungen:
- EP-A- 0 096 289
- EP-A- 0 262 389
- EP-A- 0 335 222
- EP-A- 0 482 445
- FR-A- 2 212 417
- US-A- 4 920 089

## Beschreibung

Die vorliegende Erfindung betrifft neue Katalysatoren, die zur Hydrierung organischer Verbindungen geeignet sind. Weiterhin betrifft sie ein Verfahren zu ihrer Herstellung, ihre Verwendung zur Herstellung von medizinischem Weißöl, von hochreinen medizinischen Paraffinen und von niedrigsiedenden aromatenarmen bzw. aromatenfreien Kohlenwasserstoffgemischen sowie Verfahren zur Herstellung dieser Stoffe.

Zur Hydrierung organischer Verbindungen wie Aromaten und Amine werden in technischen Anlagen häufig nickelhaltige Katalysatoren verwendet. Die EP-A 335 222 lehrt ein Verfahren zur Herstellung solcher nickelhaltiger Katalysatoren, die weiterhin Aluminiumoxid, Zirkoniumoxid und wahlweise Siliciumdioxid enthalten. Die aktiven Massen werden durch gleichzeitige Fällung aus einer lösliche Salze der genannten Metalle enthaltenden Lösung mittels einer basischen Verbindung bei pH 7 bis 10 erhalten und durch Filtration, Trocknung und Reduktion zum aktiven Katalysator verarbeitet. Die so erhaltenen Katalysatoren Sind zwar für eine Vielzahl verschiedener Hydrierungsreaktionen einsetzbar, ihre mechanische Härte ist jedoch in vielen Fällen unbefriedigend, d.h. die Katalysatoren zerbrechen leicht bei der Befüllung technischer Reaktoren oder weisen bedingt durch ihren mechanischen Zerfall eine nicht akzeptable Lebensdauer auf.

EP-A-482 445 lehrt ein verfahren zur Hydrierung von Acetylenalkoholen unter Verwendung nickelhaltiger Hydrierkatalysatoren, die im nicht reduzierten Zustand 20 bis 85 Gew.-% Zirkoniumdioxid, 1 bis 30 Gew.-% Siliciumdioxid und 1 bis 30 Gew.-% Aluminiumoxid aufweisen. Diese Katalysatoren weisen bei der hydrierenden Entfernung von aromatischen Verbindungen aus Kohlenwasserstoffgemischen im allgemeinen eine relativ geringe Aktivität auf und zeigen eine unbefriedigende Härte.

Es bestand daher die Aufgabe, nickelhaltige Katalysatoren bereitzustellen, die diese Nachteile nicht aufweisen.

Moderne Verfahren zur Herstellung von medizinischen Weißölen arbeiten nach einem mehrstufigen Hydrierverfahren. So lehren die DE-A 23 66 264 und die EP-A 96 289 einen zweistufigen Prozeß, in dem Erdölfraktionen mit einem Siedebereich von 200 bis 550°C zu medizinischen Weißölen hydriert werden. In der ersten Hydrierstufe werden die gewünschtenfalls vorher solventraffinierten und entparaffinierten Einsatzöle an schwefelfesten Hydrierkatalysatoren zu sogenannten technischen Weißölen raffiniert. In einer zweiten Stufe werden diese Weißöle zu medizinischen Weißölen weiterhydriert, wobei in dieser Stufe ein nickelhaltiger Katalysator verwendet wird.

In der EP-A 262 381 wird die Verarbeitung von durch Entparaffinierung gewonnenen Rohparaffinen durch einen zweistufigen Prozeß - in Analogie zur Herstellung von medizinischen Weißölen - zu hochreinen Paraffinen beschrieben.

Mehrere Katalysatoren für die genannten Hydrierungen sind bereits vorgeschlagen worden.

Die EP-A 290 100 lehrt Trägerkatalysatoren mit 5 bis 40 Gew.-% Nickel auf Aluminiumoxid. In der US-A 4 055 481 werden ebenfalls nickelhaltige Trägerkatalysatoren mit Aluminiumoxid als Trägermaterial mit einer BET-Oberfläche von 130 bis 190 m²/g gelehrt.

Die DE-A 23 66 264 betrifft Katalysatoren, die durch Fällung aus wäßrigen Lösungen, die u.a. Nickel und Aluminium enthalten können, hergestellt wird. Einen Katalysator mit Nickel als aktivem Metall auf Siliciumdioxid beschreibt die EP-A 96 289.

Bei der Herstellung medizinischer Weißöle und hochreiner Paraffine besteht u.a. die Aufgabe in einer Absenkung des Aromatengehaltes auf einen Wert, der den durch die einschlägigen gesetzlichen Vorschriften festgelegten Höchstwert nicht überschreitet. Der für diese Hydrierung eingesetzte Katalysator muß schon bei niedrigen Betriebstemperaturen eine hohe Hydrieraktivität aufweisen, da erhöhte Temperaturen das thermodynamische Gleichgewicht für die Aromatenhydrierung auf die Seite der Ausgangsstoffe verschieben. Außerdem treten bei höheren Temperaturen unerwünschte Nebenreaktionen, z.B. durch Spaltung von Kohlenwasserstoffen, die zu einer Verschlechterung der Produkt-qualität durch Absenkung der Viskosität, des Flammpunktes und/oder der Siedekurve führen. Die oben genannten Katalysatoren erfüllen dieses Erfordernis der niedrigen Betriebstemperatur nicht oder nur in unbefriedigendem Maße. Der Einsatz von Katalysatoren, die bei einer niedrigen Betriebstemperatur verwendet oder aber direkt in einer technischen Anlage ohne vorhergehende thermische Aktivierung angefahren werden können, bringt im technischen Betrieb einen großen Vorteil durch Verkürzung der Anfahrzeiten und Verringerung des Energieeintrages.

Es stellte sich daher als weitere Aufgabe, Katalysatoren für die Herstellung von medizinischem Weißöl sowie von hochreinen medizinischen Paraffinen und niedrigsiedenden aromatenfreien Kohlenwasserstoffgemischen zu finden, die die genannten Anforderungen einer niedrigen Betriebstemperatur bei hoher Aktivität erfüllen.

Demgemäß wurden Katalysatoren gefunden, die im wesentlichen 65 bis 80 % Nickel, berechnet als Nickeloxid, 10 bis 25 % Silicium, berechnet als Siliciumoxid, 2 bis 10 % Zirkonium, berechnet als Zirkoniumoxid und 0 bis 10 % Aluminium, berechnet als Aluminiumoxid enthalten mit der Maßgabe, daß die Summe aus dem Gehalt an Siliciumdioxid und Aluminiumoxid mindestens 15 % beträgt (Prozentangaben in Gew.-%, bezogen auf die Gesamtmasse des Katalysators), die durch Zugabe einer sauren wäßrigen Lösung von Nickel-, Zirkonium- und gewünschtenfalls Aluminiumsalzen zu einer basischen wäßrigen Lösung von Silicium- und gewünschtenfalls Aluminiumverbindungen, wobei der pH-Wert auf mindestens 6,5 abgesenkt wird und anschließend durch Zugabe weiterer basischer Lösung auf 7 bis 8 eingestellt wird, Isolieren des so ausgefällten Feststoffs, Trocknen, Formen und Calcinieren erhältlich sind.

Die erfindungsgemäßen Katalysatoren enthalten bevorzugt 70 bis 78 % Nickel, berechnet als Nickeloxid, 10 bis 20 % Silicium, berechnet als Siliciumdioxid, 3 bis 7 % Zirkonium, berechnet als Zirkoniumoxid und 2 bis 10 % Aluminium, berechnet als Aluminiumoxid mit der Maßgabe, daß die Summe aus Siliciumdioxid und Aluminiumoxid mindestens 15 % beträgt.

Die Katalysatoren können neben den genannten Oxiden Promotoren in Mengen bis zu 10 % enthalten. Dabei handelt es sich um Verbindungen wie CuO, TiO₂, MgO, CaO, ZnO und B₂O₃. Bevorzugt sind aber Katalysatoren, die keine Promotoren enthalten.

Zur Herstellung der erfindungsgemäßen Katalysatoren geht man von wäßrigen sauren Lösungen von Nickel-, Zirkonium- und gegebenenfalls Aluminiumsalzen aus. Als Salze kommen organische und anorganische Salze wie Acetate, Sulfate, Carbonate, vorzugsweise aber Nitrate der genannten Metalle in Betracht. Der Gesamtgehalt an Metallsalzen beträgt im allgemeinen 30 bis 40 Gew.-%. Da die spätere Fällung der Metalle aus der Lösung praktisch guantitativ erfolgt, hängt die Konzentration der Einzelkomponenten in der Lösung nur vom Gehalt des herzustellenden Katalysators an dieser Komponente ab. Die wäßrige Lösung wird durch Zugabe einer Mineralsäure, vorzugsweise Salpetersäure auf einen pH-Wert von unter 2 eingestellt.

Diese Lösung wird, zweckmäßigerweise unter Rühren, in eine wäßrige basische Lösung, die Siliciumverbindungen und gewünschtenfalls Aluminiumverbindungen enthält, eingetragen. Diese Lösung enthält beispielsweise Alkalimetallhydroxid oder vorzugsweise Soda, in der Regel in Mengen von 15 bis 40 Gew.-%, bezogen auf die Lösung. Der pH-Wert liegt im allgemeinen über 10.

Als Siliciumverbindung kommt neben Wasserglas, das bevorzugt wird, weiterhin SiO₂ in Betracht. Der Siliciumgehalt der Lösung liegt zweckmäßigerweise bei 0,5 bis 4 Gew.-%. Außerdem kann die Lösung gewünschtenfalls Aluminiumverbindungen in Form oxidischer Feststoffe enthalten, obwohl es bevorzugt wird, nur der sauren Lösung Aluminiumsalze zuzusetzen. Die Zugabe der sauren zur basischen Lösung erfolgt im allgemeinen bei 30 bis 100°C, vorzugsweise bei 60 bis 80°C. Sie wird in der Regel über einen Zeitraum von 0,5 bis 4 Stunden vorgenommen.

Es wird soviel von der sauren Lösung zugesetzt, daß der pH-Wert auf mindestens 6,5 absinkt. Dabei werden unlösliche Verbindungen gefällt. Bevorzugt wird ein Bereich von 4,0 bis 6,5, besonders bevorzugt von 5,5 bis 6,5. Niedrigere pH-Werte sind möglich, ergeben aber keinen erkennbaren Vorteil für die so hergestellten Katalysatoren. In der Regel wird dieser pH-Wert je nach der Menge der eingesetzten Lösungen 1 bis 60 Minuten gehalten, dann wird er durch Zugabe von weiterer basischer Lösung auf 7 bis 8 eingestellt und die Fällung der Metallverbindungen wird bei diesem pH-Wert vervollständigt.

Werden Katalysatoren gewünscht, die Promotoren enthalten, ist es zweckmäßig, einer der beschriebenen Lösungen lösliche Metallsalze als Vorstufen für die Promotoren zuzusetzen, diese Metalle mitzufällen und mit dem so erhaltenen Fällungsprodukt weiterzuverarbeiten. Die Promotoren können aber auch als Feststoffe in die Fällungslösung gegeben werden.

Das gefällte Produkt wird, beispielsweise durch Filtration, isoliert. In der Regel schließt sich daran ein Waschschritt an, wobei insbesondere gegebenenfalls während der Fällung mitgerissene Alkalimetallionen und Nitrationen ausgewaschen werden. Anschließend wird der so erhaltene Feststoff getrocknet, wofür je nach Menge des Trockenguts beispielsweise ein Trockenschrank oder ein Sprühtrockner eingesetzt werden kann. Im allgemeinen beträgt die Trocknungstemperatur 100 bis 200°C. Vor dem nächsten Verfahrensschritt können dem Feststoff gewünschtenfalls die oben genannten Promotoren zugemischt werden. Das getrocknete Produkt wird dann bevorzugt calciniert, was in der Regel bei Temperaturen von 300 bis 700°C, vorzugsweise 320 bis 450°C, über einen Zeitraum von 0,5 bis 8 Stunden erfolgt.

Zur bestimmungsgemäßen Verwendung wird der calcinierte Feststoff zu Formkörpern geformt, beispielsweise durch Extrusion zu Strängen oder durch Tablettierung. Dazu werden dem calcinierten Feststoff an sich bekannte Peptisierungsmittel wie Salpetersäure oder Ameisensäure in Mengen von in der Regel 0,1 bis 10 Gew.-%, bezogen auf den zu verformenden Feststoff, zugesetzt. Zur Tablettierung kann z.B. Graphit verwendet werden. Die so erhaltenen Formkörper werden in der Regel bei Temperaturen von 300 bis 700°C, vorzugsweise 350 bis 500°C, über einen Zeitraum von 1 bis 8 Stunden calciniert.

Vor der Verwendung der erfindungsgemäßen Katalysatoren zur Hydrierung organischer Verbindungen können jene durch Reduktion mit Wasserstoff oder einem Wasserstoff enthaltenden Gas, bei Temperaturen, die im allgemeinen bei 150 bis 550°C, vorzugsweise bei 300 bis 500°C, liegen, aktiviert werden, wobei der Wasserstoffpartialdruck zweckmäßigerweise 1 bis 300 bar beträgt und die Reduktion solange ausgeführt wird, bis sich kein Wasser mehr bildet.

Zur Lagerung oder zum Transport hat es sich als zweckmäßig erwiesen, die reduzierten Katalysatoren zu passivieren. Diese Passivierung kann beispielsweise mit Kohlendioxid, Sauerstoff oder Wasserdampf erfolgen. Hierbei wird das Nickel zumindest teilweise in seine oxidische Form überführt. Die einzelnen Schritte der Passivierung sowie der anschließenden Überführung passivierter Katalysatoren in die aktive Form ist z.B. in EP-A 262 389 beschrieben.

Die erfindungsgemäßen Katalysatoren lassen sich zur Hydrierung organischer Verbindungen verwenden, beispielsweise zur Hydrierung von Nitrilen, Olefinen, Nitroverbindungen und aromatischen Kohlenwasserstoffen sowie zur aminierenden Hydrierung von Aldehyden und Ketonen.

Die erfindungsgemäßen Katalysatoren sind besonders zur Herstellung medizinischer Weißöle, hochreiner medizinischer Paraffine und niedrigsiedender aromatenfreier Kohlenwasserstoffgemische geeignet.

Medizinische Weißöle, hochreine medizinische Paraffine und niedrigsiedende aromatenarme bzw. aromatenfreie Kohlenwasserstoffgemische sind stark raffinierte Erdölfraktionen, die frei von Sauerstoff-, Stickstoff- und Schwefelverbindungen sind. Sie enthalten praktisch keine Anteile an aromatischen Kohlenwasserstoffen. Medizinische Weißöle und medizinische Paraffine werden hauptsächlich zur Herstellung von Kosmetika und Arzneimitteln und im Lebensmittelsektor verwendet. Für diese Verwendungen ist es erforderlich, daß die Produkte geschmacksneutral, geruchlos, farblos und/oder chemisch weitgehend inert sind. Die Anforderungen, die für Weißöle und medizinische Paraffine gelten, sind durch Spezifikationen definiert, die z.B. in USA durch die Food and Drug Administration (FDA) oder in der Bundesrepublik Deutschland durch das Deutsche Arzneimittelbuch (DAB) bzw. die Mitteilungen des Bundesgesundheitsamtes (BGA) festgelegt werden. Niedrigsiedende aromatenfreie Kohlenwasserstoffgemische kommen beispielsweise als Kraftstoffe für Verbrennungsmotoren in Betracht.

Medizinische Weißöle werden durch Hydrierung technischer Weißöle hergestellt. Auch für diese technischen Weißöle liegen Spezifikationen, z.B. nach FDA 178.3620, vor. Technische Weißöle können z.B. durch Schwefelsäureraffination von Erdölfraktionen gewonnen werden. Bevorzugt werden aber technische Weißöle vorwendet, die durch Hydrierung von Erdölfraktionen, die oberhalb etwa 200°C sieden, gewonnen werden. Bei erhöhten Gehalten an aromatischen Kohlenwasserstoffen und heteroaromatischen Verbindungen werden diese Erdölfraktionen gegebenenfalls zunächst einer Lösungsmittelraffination, z.B. mit Furfurol oder N-Methyl-pyrrolidon, unterworfen, um den Aromatengehalt abzusenken. Zur Erniedrigung des Stockpunktes werden die Erdölfraktionen in der Regel einer Entparaffinierung unterzogen, die sowohl mit geeigneten Lösungsmittelgemischen, z.B. Methylethylketon/Toluol, oder auf katalytischem Wege erfolgen kann. Die genannten Erdölfraktionen werden erfindungsgemäß bevorzugt durch eine zweistufige Hydrierung zum medizinischen Weißöl umgesetzt.

Rohparaffine fallen beispielsweise bei der Entparaffinierung von Erdöldestillaten, hauptsächlich von Schmierölfraktionen, an. Weiterhin werden Rohparaffine auch aus Rückstandsölen, die vorher in der Regel durch eine Entasphaltierung von Asphalten befreit wurden, abgetrennt. Die Entparaffinierung kann in an sich bekannter Weise z.B. mit Lösungsmitteln wie Methylethylketon-Toluol-Gemischen, chlorierten Kohlenwasserstoffen oder unter Verwendung von Harnstoff erfolgen. Erfindungsgemäß werden die Rohparaffine bevorzugt zu hochreinen medizinischen Paraffinen hydriert.

Niedrigsiedende aromatenarme bzw. aromatenfreie Kohlenwasserstoffgemische werden durch Hydrierung von Erdölfraktionen mit einem Siedebeginn von unter 200°C, z.B. Kerosin, Leicht- und Schwerbenzin, gewonnen. Erfindungsgemäß werden die genannten Erdölfraktionen bevorzugt zweistufig zu aromatenarmen bzw. -freien Kohlenwasserstoffgemischen hydriert.

Andere Kohlenwasserstoffgemische mit einem Siedebeginn von unter 200°C, z.B. Reformatbenzin, die in der Regel weniger als 100 ppm Schwefel enthalten, können bevorzugt einstufig an den erfindungsgemäßen Katalysatoren hydriert werden.

Das im folgenden beschriebene zweistufige Hydrierverfahren läßt sich zur Herstellung der drei genannten Stoffklassen anwenden. Dazu werden die Ausgangsstoffe einer zweistufigen Hydrierung an verschiedenen Katalysatoren unterworfen, wie es beispielsweise die EP-A 96 289 beschreibt. In einer ersten Stufe können sie an schwefelfesten Katalysatoren, z.B. Nickeloxid, Molybdänoxid und Phosphorsäure auf Aluminiumoxid, die durch Tränkung mit einer phosphorsauren Nickel-Molybdän-Lösung hergestellt werden können, bei Drucken von 30 bis 200 bar und Temperaturen von 250 bis 380°C hydriert werden. Das Gas-zu-Ausgangsstoff-Verhältnis beträgt dabei im allgemeinen 0,1 bis 1 m³ Wasserstoff unter Normalbedingungen pro kg Ausgangsstoff. Die Katalysatorbelastung liegt zweckmäßigerweise bei 0,1 bis 5 kg Ausgangsstoff pro Liter Katalysator und Stunde. Nach dieser Hydrierstufe wird das erhaltene Produkt üblicherweise abgekühlt und in eine Gas- und Flüssigphase getrennt. Die Flüssigphase kann zum Austreiben leichtflüchtiger Anteile z.B. mit Stickstoff oder Wasserdampf gestrippt werden. Sie wird dann einer zweiten Hydrierung an den erfindungsgemäßen Katalysatoren unterworfen. Die Reaktionstemperatur liegt hierbei in der Regel bei 40 bis 300°C, vorzugsweise 100 bis 250°C, der Druck beträgt 5 bis 350 bar, vorzugsweise 40 bis 200 bar. Es hat sich als vorteilhaft erwiesen, eine Katalysatorbelastung von 0,1 bis 2 kg Ausgangsstoff pro Liter Katalysator und Stunde und ein Gas-zu-Ausgangsstoff-Verhältnis von 0,1 bis 1 m³ Wasserstoff unter Normalbedingungen pro kg Ausgangsstoff zu wählen.

Die Hydrierung kann diskontinuierlich, vorzugsweise aber kontinuierlich in einem Reaktor ausgeführt werden, der den erfindungsgemäßen Katalysator in Form eines Festbettes enthält und der in Riesel- oder Sumpffahrweise betrieben werden kann.

Die erfindungsgemäßen Katalysatoren weisen bei langen Standzeiten und hohen Drucksätzen niedrige Betriebstemperaturen auf, wobei die international üblichen maximal zulässigen Werte gemäß DAB oder FDA zur Produktqualität mindestens erreicht oder unterschritten werden. Weiterhin zeichnen sie sich durch eine hohe mechanische Härte aus.

### Beispiele

Alle in den Beispielen gemachten Prozentangaben sind Gewichtsprozente.

Die Wasserstoffmengen in Liter l beziehen sich immer auf Normalbedingungen.

### Beispiel 1

### Herstellung eines erfindungsgemäßen Katalysators

Eine wäßrige Lösung aus Nickelnitrat, Aluminiumnitrat und Zirkoniumnitrat, welches aus Zirkoniumcarbonat durch Zugabe von Salpetersäure hergestellt wurde, die, berechnet als Oxide, 9,0 % NiO, 0,6 % Al₂O₃ und 0,6 % ZrO₂ enthielt, wurde über eine Dauer von ca. 1h in einem Rührgefäß zu einer 20 %igen Natriumcarbonatlösung gegeben, die 1,8 % gelöstes SiO₂ in Form von Wasserglas enthielt, so daß ein pH-Wert von 6,0 erreicht wurde. Nach weiteren 5 Minuten wurde der pH-Wert durch Zugabe weiterer Natriumcarbonatlösung auf 7,5 erhöht. Die Temperatur betrug während der Fällung 70°C.

Die erhaltene Suspension wurde filtriert und das Filtrat mit vollentsalztem Wasser gewaschen, bis die elektrische Leitfähigkeit des Filtrates ca. 50 µS betrug. Danach wurde das Filtrat bei einer Temperatur von 125°C in einem Sprühtrockner getrocknet. Das auf diese Weise erhaltene Hydroxidcarbonatgemisch wurde bei einer Temperatur von 350°C über einen Zeitraum von 1 h calciniert.

Der so erhaltene Katalysator hatte die Zusammensetzung 74,5 % Nickel, berechnet als NiO, 14,7 % Silicium, berechnet als SiO₂, 5,4 % Aluminium, berechnet als Al₂O₃ und 4,5 % Zirkonium, berechnet als ZrO₂.

Das Katalysatorpulver wurde mit 41 % Wasser und 2,5 % konz. Salpetersäure geknetet und zu Strängen von 1,5 mm Durchmesser extrudiert. Die so erhaltenen Katalysatorstränge wurden bei einer Temperatur von 450°C über einen Zeitraum von 1 h calciniert.

Die Katalysatorstränge hatten eine Porosität von 0,5 ml/g (bestimmt durch Wasseraufnahme), eine Stranghärte von 13,4 N (3 lbs/mm, bestimmt durch Zerbrechen eines Stranges zwischen zwei Stempeln und Bestimmung der dazu benötigten Kraft pro Längeneinheit des Stranges) und ein Litergewicht von 916 g/l.

### Beispiel 2

### Herstellung von medizinischem Weißöl

Der nach Beispiel 1 erhaltene Katalysator wurde bei einer Temperatur von 400°C und einem Wasserstoffdruck von 5 bar reduziert. Nach Abkühlen wurde der Katalysator in einem Hydrierreaktor bei einem Wasserstoffdruck von 200 bar auf eine Temperatur von 190°C gebracht. An 0,2 Liter des Katalysators wurden dann bei einer Temperatur von 190°C und einem Wasserstoffdruck von 200 bar 0,04 kg/h eines technischen Weißöls A mit 16 l/h Wasserstoff hydriert. Die Flüssigphase des Reaktoraustrages wurde nach Abtrennen der Gasphase gesammelt und nach DAB 8 und DAB 10 untersucht.

Die Analysendaten des erfindungsgemäß erhaltenen medizinischen Weißöls nach der vergleichsweise kurzen Standzeit von 168 h sind in Tabelle 2 gezeigt.

**Tabelle 1**

| Analysendaten der eingesetzten technischen Weißöle | | |
|---|---|---|
| | A | B |
| Dichte bei 15°C [g/cm³] | 0,862 | 0,865 |
| Viskosität 40°C [mm²/s] | 71,4 | 70,6 |
| Aromatengehalt nach Brandes [Gew.-%] | 3,9 | 3,7 |
| S-Gehalt [ppm] | 2 | 2 |
| | | |

| Siedebereich ASTM D 1160 | | |
|---|---|---|
| Siedebeginn | 395 | 388 |
| 10 % | 458 | 465 |
| 50 % | 493 | 498 |
| 95 % | 540 | 541 |

### Beispiel 3 - Vergleichsversuch

In diesem Vergleichsversuch wurde ein Katalysator verwendet, dessen Herstellung in der EP-A 96 289, Katalysator A, beschrieben ist. Der Vergleichskatalysator lag in Form von 1,5 mm Strängen vor. Der Vergleichskatalysator hatte eine Porosität (gemessen über die Wasseraufnahme) von 0,54 ml/g, eine Stranghärte von 13,4 N/mm und ein Litergewicht von 1,1 g/l. Wie in DE-A 36 29 631 beschrieben, wurde der Vergleichskatalysator mit Wasserstoff bei einer Temperatur von 440°C reduziert und in einem Hydrierreaktor bei einem Wasserstoffdruck von 80 bar und einer Temperatur von 440°C aktiviert.

An 0,2 Liter des Vergleichskatalysators wurde bei einer Temperatur von 190°C und einem Wasserstoffdruck von 200 bar 0,04 kg/h des technischen Weißöls A mit 16 l/h Wasserstoff hydriert. Die Flüssigphase des Reaktoraustrages wurde wie in Beispiel 2 untersucht. Die Analysendaten des im Vergleichsversuch erhaltenen medizinischen Weißöls nach der vergleichsweise kurzen Standzeit von 168 h sind in Tabelle 2 angegeben. Es ergeben sich mit dem erfindungsgemäßen Katalysator deutlich bessere Analysenwerte. Außerdem besitzt der erfindungsgemäße Katalysator eine deutlich niedrigere Betriebstemperatur als der Vergleichskatalysator, um die genannten, deutlich besseren Analysenwerte zu erreichen.

### Beispiel 4

### Längere Standzeit

An 0,2 Liter des erfindungsgemäßen Katalysators gemaß Beispiel 1, der wie in Beispiel 2 beschrieben reduziert wurde, wurde bei einer Temperatur von 190°C und einem Wasserstoffdruck von 200 bar 0,04 kg/h des technischen Weißöls A mit 16 l/h Wasserstoff hydriert. Die Flüssigphase des Reaktoraustrages wurde wie in Beispiel 2 untersucht. Die Analysendaten des erfindungsgemäß erhaltenen medizinischen Weißöls nach einer Standzeit von 2760 h sind in Tabelle 2 gezeigt.

### Beispiel 5 - Vergleichsversuch

### Längere Standzeit im Vergleich zu Beispiel 3

An 0,2 Liter des Vergleichskatalysators gemäß Beispiel 3 wurde bei einer Temperatur von 190°C und einem Wasserstoffdruck von 200 bar 0,04 kg/h des technischen Weißöls mit 16 l/h Wasserstoff hydriert. Die Flüssigphase des Reaktoraustrages wurde wie in Beispiel 2 untersucht. Die Analysendaten des im Vergleichsversuch erhaltenen medizinischen Weißöls nach einer Standzeit von 1584 h sind in Tabelle 2 gezeigt. Die Weißölspezifikationen nach FDA und DAB werden nach dieser Standzeit im H₂SO₄-Test nicht mehr erreicht.

Der erfindungsgemäße Katalysator wird langsamer desaktiviert als der Vergleichskatalysator. Nach der langen Standzeit von 2760 h wurden die Weißölspezifikationen noch weit unterschritten (s. Beispiel 6).

### Beispiel 6

### Höhere Katalysatorbelastung

An 0,2 Liter des erfindungsgemäßen Katalysators gemäß Beispiel 1. der wie in Beispiel 2 beschrieben reduziert wurde, wurden bei einer Temperatur von 190°C und einem Wasserstoffdruck von 200 bar 0,12 kg/h des technischen Weißöls B (siehe Tabelle 1) mit 48 l/h Wasserstoff hydriert. Die Flüssigphase des Reaktoraustrages wurde wie in Beispiel 2 nach einer Standzeit von 2760 h untersucht. Die Analysendaten des erfindungsgemäß erhaltenen medizinischen Weißöls sind in Tabelle 2 gezeigt.

### Beispiel 7 - Vergleichsversuch

### Höhere Katalysatorbelastung

An 0,2 Liter des Vergleichskatalysators aus Beispiel 3 wurden bei einer Temperatur von 190°C und einem Wasserstoffdruck von 200 bar 0,12 kg/h des technischen Weißöls B (siehe Tabelle 1) mit 48 l/h Wasserstoff hydriert. Die Flüssigphase des Reaktoraustrages wurde wie im Beispiel 2 untersucht. Die Analysendaten des im Vergleichsversuch erhaltenen Weißöls sind in Tabelle 2 gezeigt.

Mit dem erfindungsgemäßen Katalysator wird bei vergleichsweise hoher Belastung im Gegensatz zum Vergleichskatalysator spezifikationsgerechtes medizinisches Weißöl erhalten.

### Beispiel 8

### Herstellung von Katalysator-Tabletten

Das erfindungsgemäße Katalysatorpulver aus Beispiel 1 wurde mit 3 % Graphit vermischt und zu 3 x 3 mm Tabletten verformt. Die so erhaltenen Katalysatortabletten wurden nun bei einer Temperatur von 500°C über einen Zeitraum von 4 h calciniert. Die erfindungsgemäß erhaltenen Katalysatortabletten hatten eine Porosität (gemessen über die Wasseraufnahme) von 0,2 ml/g, eine Härte von 5094 N/cm² (Seitendruckfestigkeit; bestimmt durch Messung der Kraft, die zum Zerbrechen einer auf der schmalen Seite gelagerten Tablette erforderlich ist) und ein Litergewicht von 1551 g/l.

### Beispiel 9

### Herstellung von medizinischem Weißöl

Der nach Beispiel 8 erhaltene Katalysator wurde bei einer Temperatur von 400°C und einem Wasserstoffdruck von 5 bar reduziert. Nach Abkühlen wurde er Katalysator in einem Hydrierreaktor bei einem Wasserstoffdruck von 200 bar auf eine Temperatur von 190°C gebracht. An 0,2 Liter Katalysator wurde bei einer Temperatur von 190°C und einem Wasserstoffdruck von 200 bar 0,04 kg/h des technischen Weißöls B mit 16 l/h Wasserstoff hydriert. Die Flüssigphase des Reaktoraustrages wurde wie in Beispiel 2 untersucht. Die Analysendaten des erfindungsgemäß erhaltenen medizinischen Weißöls sind in Tabelle 2 gezeigt.

### Beispiel 10 - Vergleichsversuch

In diesem Vergleichsversuch wurde ein handelsüblicher Katalysator der Firmen Mallinckrodt mit der Bezeichnung E-474 TR verwendet. Der Vergleichskatalysator lag in Form von 3 x 3 mm Tabletten vor und hatte nach unseren analytischen Daten eine Zusammensetzung von 74,5 % Nickel, berechnet als NiO, 14,4 % Silicium, berechnet als SiO₂, 4,4 % Aluminium, berechnet als Al₂O₃ und 3,2 % Zirkonium, berechnet als ZrO₂. Die Katalysatortabletten hatten eine Porosität (gemessen durch Wasseraufnahme) von 0,3 ml/g, eine Härte von 3559 N/cm² und ein Litergewicht von 1225 g/l.

Der Vergleichskatalysator wurde in einem Hydrierreaktor bei einem Wasserstoffdruck von 80 bar und einer Temperatur von 250°C aktiviert.

An 0,2 Liter des Katalysators wurde dann bei einer Temperatur von 190°C und einem Wasserstoffdruck von 200 bar 0,04 kg/h des technischen Weißöls B mit 16 l/h Wasserstoff hydriert. Die Flüssigphase des Reaktoranfalls wurde wie in Beispiel 2 untersucht. Die Analysendaten des im Vergleichsversuch erhaltenen Weißöls sind in Tabelle 2 gezeigt.

Mit dem erfindungsgemäßen Katalysator aus Beispiel 9 ergeben deutlich bessere Analysenwerte trotz vergleichbarer chemischer Zusammensetzung.

### Beispiel 11

### Niedrige Betriebstemperatur

An 0,2 Liter des erfindungsgemäßen Katalysators aus Beispiel 1, der wie in Beispiel 2 beschrieben reduziert wurde, wurde bei einer Temperatur von 120°C und einem Wasserstoffdruck von 200 bar 0,04 kg/h des technischen Weißöls A mit 16 l/h Wasserstoff hydriert. Die Flüssigphase des Reaktoraustrages wurde wie in Beispiel 2 untersucht. Die Analysendaten des erfindungsgemäß erhaltenen medizinischen Weißöls nach einer Standzeit von 384 h sind in Tabelle 2 gezeigt.

### Beispiel 12 - Vergleichsversuch

An 0,2 Liter des Vergleichskatalysators gemäß Beispiel 3 wurde bei einer Temperatur von 150°C und einem Wasserstoffdruck von 200 bar 0,04 kg/h des technischen Weißöls A mit 16 l/h Wasserstoff hydriert. Die Flüssigphase des Reaktoraustrages wurde wie in Beispiel 2 untersucht. Die Analysendaten des im Vergleichsversuch erhaltenen medizinischen Weißöls nach einer Standzeit von 408 h sind in Tabelle 2 gezeigt. Die Weißölspezifikationen nach FDA und DAB werden bei dieser Temperatur nicht mehr erreicht.

Der erfindungsgemäße Katalysator erreicht sogar bei einer 30 K niedrigeren Temperatur als in diesem Beispiel noch die Weißölspezifikationen.

### Beispiel 13

### Niedriger Wasserstoffdruck

An 0,2 Liter des erfindungsgemäßen Katalysators aus Beispiel 1, der wie in Beispiel 2 beschrieben reduziert wurde, wurden bei einer Temperatur von 190°C und einem Wasserstoffdruck von 50 bar 0,04 kg/h des technischen Weißöls A mit 16 l/h Wasserstoff hydriert. Die Flüssigphase des Reaktoraustrages wurde wie in Beispiel 2 nach einer Standzeit von 1080 h untersucht. Die Analysendaten des erfindungsgemäß erhaltenen medizinischen Weißöls sind in Tabelle 2 gezeigt.

### Beispiel 14 - Vergleichsversuch

An 0,2 Liter des Vergleichskatalysators gemäß Beispiel 3 wurden bei einer Temperatur von 190°C und einem Wasserstoffdruck von 50 bar 0,04 kg/h des technischen Weißöls A mit 16 l/h Wasserstoff hydriert. Die Flüssigphase des Reaktoraustrages wurde wie in Beispiel 2 untersucht. Die Analysendaten des im Vergleichsversuch erhaltenen Weißöls sind in Tabelle 2 gezeigt.

Mit dem erfindungsgemäßen Katalysator werden bei dem vergleichsweise niedrigen Druck im Gegensatz zum Vergleichskatalysator die Spezifikationen für medizinisches Weißöl sehr gut erfüllt.

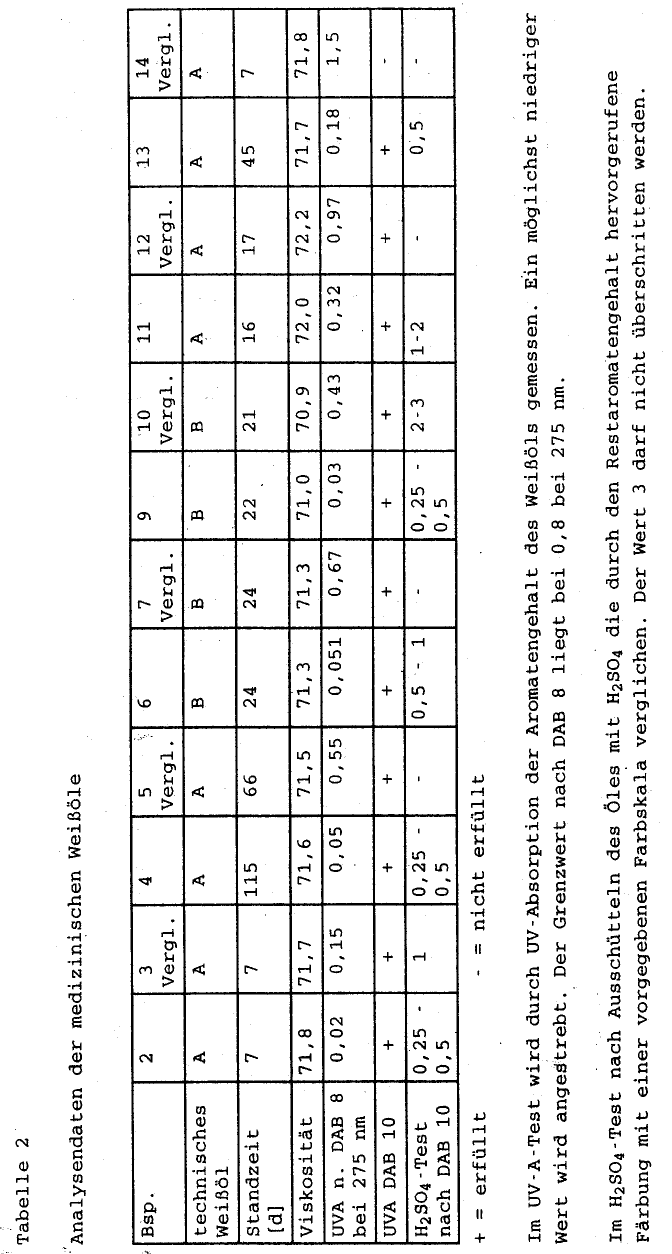

### Beispiel 15

### Erfindungsgemäße Katalysatorherstellung

Eine wäßrige Lösung aus Nickelnitrat, Aluminiumnitrat und Zirkoniumnitrat, welches aus Zirkoniumcarbonat durch Zugabe von Salpetersäure hergestellt wurde, die, berechnet als Oxide, 9,0 % NiO, 0,6 % Al₂O₃ und 0,6 % ZrO₂ enthielt, wurde in einem Rührgefäß zu einer 20 %igen Natriumcarbonatlösung gegeben, die 1,8 % gelöstes SiO₂ in Form von Wasserglas enthielt, so daß ein pH-Wert von 6,0 erreicht wurde (Dauer 45 Minuten). Nach 5 Minuten wurde der pH-Wert durch Zugabe weiterer Natriumcarbonatlösung auf 7,0 erhöht. Die Temperatur betrug während der Fällung 70°C.

Die erhaltene Suspension wurde filtriert und das Filtrat mit vollentsalztem Wasser gewaschen, bis die elektrische Leitfähigkeit des Filtrates ca. 20 µS betrug. Danach wurde das Filtrat bei einer Temperatur von 120°C in einem Trockenschrank getrocknet. Das auf diese Weise erhaltene Gemisch aus Hydroxiden und Carbonaten wurde bei einer Temperatur von 350°C über einen Zeitraum von 4 h calciniert.

Der so erhaltene Katalysator hatte die Zusammensetzung 73,9 % Nickel, berechnet als NiO, 13,9 % Silicium, berechnet als SiO₂, 5,7 % Aluminium, berechnet als Al₂O₃ und 5,7 % Zirkonium, berechnet als ZrO₂.

Das Katalysatorpulver wurde mit 54 Gew.-%, bezogen auf das Pulver, Wasser und 2,6 Gew.-% konz. Salpetersäure geknetet und zu Strängen von 1,5 mm Durchmesser extrudiert. Die so erhaltenen Katalysatorstränge wurden bei einer Temperatur von 400°C über einen Zeitraum von 1 h calciniert.

Die Katalysatorstränge hatten eine Porosität von 0,4 ml/g, eine Stranghärte von 10,7 N/mm und ein Litergewicht von 880 g/l.

### Beispiel 16 - Vergleichsversuch

### Herstellung eines Katalysators durch Fällung bei pH 7

Durchführung wie Beispiel 15, jedoch wurde durch die Zugabe der sauren Lösung zur Sodalösung direkt ein pH-Wert von 7 eingestellt.

Der so erhaltene Katalysator hatte die Zusammensetzung 73,8 % Nickel, berechnet als NiO, 14,5 % Silicium, berechnet als SiO₂, 5,7 % Aluminium, berechnet als Al₂O₃ und 5,6 % Zirkonium, berechnet als ZrO₂.

Nach Verarbeitung wie in Beispiel 15 hatten die Katalysatorstränge eine Porosität von 0,4 ml/g, eine Stranghärte von 8,0 N/mm und ein Litergewicht von 885 g/l.

Eine Härte von unter 9 N/mm ist für den Einsatz der Katalysatoren in Riesel- und Sumpffahrweise nicht empfehlenswert da solche Katalysatoren den mechanischen Anforderungen im Reaktor nur während einer kurzen Betriebsdauer genügen.

### Beispiel 17 - Vergleichsversuch

### Vergleichsversuch wie Beispiel 16, Fällung bei pH 8

Durchführung wie Beispiel 15, jedoch wurde durch die Zugabe der sauren Lösung zur Sodalösung direkt ein pH-Wert von 8 eingestellt.

Der so erhaltene Katalysator hatte die Zusammensetzung 73,9 % Nickel, berechnet als NiO, 16,5 % Silicium, berechnet als SiO₂, 5,5 % Aluminium, berechnet als Al₂O₃ und 4,3 % Zirkonium, berechnet als ZrO₂.

Nach Verarbeitung wie in Beispiel 15 hatten die Katalysatorstränge eine Porosität von 0,3 ml/g, eine Stranghärte von 8,2 N/mm und ein Litergewicht von 955 g/l.

Der erfindungsgemäße Katalysator hat bei dem niedrigsten Litergewicht die höchste Härte.

## Patentansprüche

1. Zur Hydrierung organischer Verbindungen geeignete Katalysatoren, im wesentlichen enthaltend 65 bis 80 % Nickel, berechnet als Nickeloxid, 10 bis 25 % Silicium, berechnet als Siliciumdioxid, 2 bis 10 % Zirkonium, berechnet als Zirkoniumoxid, 0 bis 10 % Aluminium, berechnet als Aluminiumoxid mit der Maßgabe, daß die Summe aus dem Gehalt an Siliciumdioxid und Aluminiumoxid mindestens 15 % beträgt - Prozentangaben in Gew.-%, bezogen auf die Gesaatmasse des Katalysators -, erhältlich durch Zugabe einer sauren wäßrigen Lösung von Nickel-, Zirkonium- und gewünschtenfalls Aluminiumsalzen zu einer basischen wäßrigen Lösung oder Suspension von Siliciumverbindungen und gewünschtenfalls Aluminiumverbindungen, wobei der pH-Wert der so erhaltenen Mischung auf mindestens 6,5 abgesenkt und anschließend durch Zugabe weiterer basischer Lösung auf 7 bis 8 eingestellt wird, Isolieren des so ausgefällten Feststoffs, Trocknen, Formen und Calcinieren.

2. Katalysator nach Anspruch 1, dadurch gekennzeichnet, daß der Katalysator 70 bis 78 % Nickel, berechnet als Nickeloxid, 10 bis 20 % Silicium, berechnet als Siliciumoxid, 3 bis 7 % Zirkonium, berechnet als Zirkoniumoxid und 2 bis 10 % Aluminium, berechnet als Aluminiumoxid mit der Maßgabe, daß die Summe aus dem Gehalt an Siliciumdioxid und Aluminiumoxid mindestens 15 % beträgt, enthält.

3. Katalysator nach Anspruch 1 oder 2, dadurch gekennzeichnet, daß man Nickelnitrat, Zirkoniumnitrat, gewünschtenfalls Aluminiumnitrat und Wasserglas als Ausgangsverbindungen verwendet.

4. Katalysator nach den Ansprüchen 1 bis 3, dadurch gekennzeichnet, daß man als basische wäßrige Lösung eine Sodalösung verwendet.

5. Katalysator nach den Ansprüchen 1 bis 4, dadurch gekennzeichnet, daß der Katalysator durch Behandlung mit Wasserstoff oder Wasserstoff enthaltenden Gasen bei 150 bis 550°C reduziert wird.

6. Verfahren zur Herstellung von Katalysatoren gemäß Anspruch 1, dadurch gekennzeichnet, daß man eine saure wäßrige Lösung von Nickel-, Zirkonium- und gewünschtenfalls Aluminiumsalzen zu einer basischen wäßrigen Lösung von Silicium- und gegebenenfalls Aluminiumverbindungen gibt, wobei der pH-Wert der so erhaltenen Mischung auf mindestens 6,5 abgesenkt und anschließend durch Zugabe weiterer basischer Lösung auf 7 bis 8 eingestellt wird, den so ausgefällten Feststoff isoliert, trocknet, formt und calciniert.

7. Verwendung von Katalysatoren gemäß den Ansprüchen 1 bis 5 zur Herstellung von medizinischem Weißöl durch Hydrierung von technischem Weißöl, zur Herstellung von hochreinen medizinischen Paraffinen durch Hydrierung von Rohparaffinen und zur Herstellung von aromatenarmen bzw. aromatenfreien Kohlenwasserstoffgemischen durch Hydrierung von Erdölfraktionen oder anderen Kohlenwasserstoffgemischen mit einem Siedebeginn von unter 200°C.

8. Verfahren zur Herstellung von medizinischem Weißöl durch Hydrierung von technischem Weißöl, dadurch gekennzeichnet, daß man die Hydrierung an einem Katalysator gemäß den Ansprüchen 1 bis 5 vornimmt.

9. Verfahren nach Anspruch 8, dadurch gekennzeichnet, daß man durch Hydrierung von oberhalb 200°C siedenden Erdölfraktionen an schwefelfesten Katalysatoren hergestelltes technisches Weißöl verwendet.

10. Verfahren zur Herstellung von hochreinen medizinischen Paraffinen durch Hydrierung von Rohparaffinen, dadurch gekennzeichnet, daß man die Hydrierung an einem Katalysator gemäß den Ansprüchen 1 bis 5 vornimmt.

11. Verfahren nach Anspruch 10, dadurch gekennzeichnet, daß man durch Entparaffinierung von oberhalb 200°C siedenden Erdölfraktionen gewonnene Rohparaffine verwendet.

12. Verfahren nach Anspruch 10 oder 11, dadurch gekennzeichnet, daß man an einem schwefelfesten Katalysator hydrierte Rohparaffine verwendet.

13. Verfahren zur Herstellung aromatenarmer bzw. aromatenfreier Kohlenwasserstoffgemische durch Hydrierung von Erdölfraktionen oder anderen Kohlenwasserstoffgemischen mit einem Siedebeginn von unter 200°C, dadurch gekennzeichnet, daß man die Hydrierung an einem Katalysator gemäß den Ansprüchen 1 bis 5 vornimmt.

## Claims

1. A catalyst suitable for hydrogenating organic compounds, essentially containing from 65 to 80 % of nickel, calculated as nickel oxide, from 10 to 25 % of silicon, calculated as silicon dioxide, from 2 to 10 % of zirconium, calculated as zirconium oxide, and from 0 to 10 % of aluminum, calculated as aluminum oxide, with the proviso that the sum of the content of silicon dioxide and aluminum oxide is at least 15 % (percentages in % by weight, based on the total weight of the catalyst), obtainable by addition of an acidic aqueous solution of nickel, zirconium and, if desired, aluminum salts to a basic aqueous solution or suspension of silicon compounds and if desired aluminum compounds, the pH of the mixture thus obtained being decreased to at least 6.5 and then adjusted to from 7 to 8 by addition of further basic solution, isolation of the solid thus precipitated, drying, shaping and calcining.

2. A catalyst as claimed in claim 1, wherein the catalyst contains from 70 to 78 % of nickel, calculated as nickel oxide, from 10 to 20 % of silicon, calculated as silicon oxide, from 3 to 7 % of zirconium, calculated as zirconium oxide and from 2 to 10 % of aluminum, calculated as aluminum oxide, with the proviso that the sum of the content of silicon dioxide and aluminum oxide is at least 15 %.

3. A catalyst as claimed in claim 1 or 2, wherein nickel nitrate, zirconium nitrate, if desired aluminum nitrate and sodium silicate are used as starting compounds.

4. A catalyst as claimed in claims 1 to 3, wherein the basic aqueous solution used is a soda solution.

5. A catalyst as claimed in claims 1 to 4, wherein the catalyst is reduced at from 150 to 550°C by treatment with hydrogen or hydrogen-containing gases.

6. A process for preparing catalysts as claimed in claim 1, which comprises adding an acidic aqueous solution of nickel, zirconium and if desired aluminum salts to a basic aqueous solution of silicon and, if appropriate, aluminum compounds, the pH of the mixture thus obtained being decreased to at least 6.5 and then adjusted to from 7 to 8 by addition of further basic solution, isolating the solid thus precipitated, drying, molding and calcining.

7. The use of catalysts as claimed in claims 1 to 5 for preparing medicinal white oil by hydrogenation of industrial white oil, for preparing highly pure medicinal paraffins by hydrogenation of crude paraffins and for preparing low-aromatic or aromatic-free hydrocarbon mixtures by hydrogenation of petroleum fractions or other hydrocarbon mixtures having a start of boiling of less than 200°C.

8. A process for preparing medicinal white oil by hydrogenating industrial white oil, which comprises performing the hydrogenation on a catalyst as claimed in claims 1 to 5.

9. A process as claimed in claim 8, wherein industrial white oil prepared by hydrogenation on sulfur-resistant catalysts of petroleum fractions boiling above 200°C is used.

10. A process for preparing highly pure medicinal paraffins by hydrogenation of crude paraffins, which comprises performing the hydrogenation on a catalyst as claimed in claims 1 to 5.

11. A process as claimed in claim 10, wherein crude paraffins obtained by deparaffinization of petroleum fractions boiling above 200°C are used.

12. A process as claimed in claim 10 or 11, wherein hydrogenated crude paraffins are used on a sulfur-resistant catalyst.

13. A process for preparing low-aromatic or aromatic-free hydrocarbon mixtures by hydrogenation of petroleum fractions or other hydrocarbon mixtures having a start of boiling of below 200°C, which comprises performing the hydrogenation on a catalyst as claimed in claims 1 to 5.

## Revendications

1. Catalyseurs convenant pour l'hydrogénation de composés organiques, contenant essentiellement 65 à 80% de nickel, calculés en oxyde de nickel, 10 à 25% de silicium, calculés en dioxyde de silicium, 2 à 10% de zirconium, calculés en oxyde de zirconium, 0 à 10% d'aluminium, calculés en oxyde d'aluminium, étant spécifié que la somme des teneurs en dioxyde de silicium et en oxyde d'aluminium s'élève au moins à 15% (indications de pourcentage en % en poids par rapport à la masse totale du catalyseur), obtenus par addition d'une solution aqueuse acide de sels de nickel, de zirconium et éventuellement d'aluminium à une solution ou suspension aqueuse basique de composés du silicium et éventuellement de composés de l'aluminium, le pH du mélange ainsi obtenu étant abaissé a 6,5 au moins, puis réglé à 7-8 par addition d'une quantité supplémentaire de solution basique, par isolement de la matière solide ainsi précipitée, séchage, façonnage et calcination.

2. Catalyseur selon la revendication 1, caractérisé en ce qu'il contient 70 à 78% de nickel, calculés en oxyde de nickel, 10 à 20% de silicium, calculés en oxyde de silicium, 3 à 7% de zirconium, calculés en oxyde de zirconium et 2 à 10% d'aluminium, calculés en oxyde d'aluminium, étant spécifié que la somme des teneurs en dioxyde de silicium et en oxyde d'aluminium s'élève au moins à 15%.

3. Catalyseur selon la revendication 1 ou 2, caractérisé en ce que l'on utilise, comme composés de départ, du nitrate de nickel, du nitrate de zirconium, éventuellement du nitrate d'aluminium et de l'orthosilicate de sodium.

4. Catalyseur selon l'une quelconque des revendications 1 à 3, caractérisé en ce que l'on utilise une solution de carbonate de sodium comme solution aqueuse basique.

5. Catalyseur selon l'une quelconque des revendications 1 à 4, caractérisé en ce qu'il est réduit par traitement par l'hydrogène ou des gaz contenant de l'hydrogène à une température de 150 à 550°C.

6. Procédé de préparation de catalyseurs selon la revendication 1, caractérisé en ce que l'on ajoute une solution aqueuse acide de sels de nickel, de zirconium et éventuellement d'aluminium à une solution aqueuse basique de composés du silicium et éventuellement de composés de l'aluminium, le pH du mélange ainsi obtenu étant abaissé à 6,5 au moins, puis réglé à 7-8 par addition d'une quantité supplémentaire de solution basique, on isole la matière solide ainsi précipitée, on la sèche, on la façonne et on la calcine.

7. Utilisation de catalyseurs selon l'une quelconque des revendications 1 à 5 pour la préparation d'huile blanche médicinale par hydrogénation d'huile blanche technique, pour la préparation de paraffines médicinales de haute pureté par hydrogénation de paraffines brutes et pour la préparation de mélanges d'hydrocarbures pauvres en substances aromatiques ou dépourvus de substances aromatiques par hydrogénation de fractions de pétrole brut ou d'autres mélanges d'hydrocarbures ayant un début d'ébullition à moins de 200°C.

8. Procédé de préparation d'huile blanche médicinale par hydrogénation d'huile blanche technique, caractérisé en ce que l'on procède à l'hydrogénation en présence d'un catalyseur selon l'une quelconque des revendications 1 à 5.

9. Procédé selon la revendication 8, caractérisé en ce que l'on utilise de l'huile blanche technique, préparée par hydrogénation de fractions de pétrole brut de point d'ébullition supérieur à 200°C en présence de catalyseurs solides au soufre.

10. Procédé de préparation de paraffines médicinales de pureté élevée par hydrogénation de paraffines brutes, caractérisé en ce que l'on procède a l'hydrogénation en présence d'un catalyseur selon l'une quelconque des revendications 1 à 5.

11. Procédé selon la revendication 10, caractérisé en ce que l'on utilise des paraffines brutes obtenues par déparaffinage de fractions de pétrole brut de point d'ébullition supérieur à 200°C.

12. Procédé selon la revendication 10 ou 11, caractérisé en ce que l'on utilise des paraffines brutes hydrogénées en présence d'un catalyseur solide au soufre.

13. Procédé de préparation de mélanges d'hydrocarbures pauvres en substances aromatiques ou dépourvus de substances aromatiques par hydrogénation de fractions de pétrole brut ou d'autres mélanges d'hydrocarbures ayant un début d'ébullition à moins de 200°C, caractérisé en ce que l'on procède à l'hydrogénation en présence d'un catalyseur selon l'une quelconque des revendications 1 à 5.
